(19) Europäisches Patentamt / European Patent Office / Office européen des brevets

(11) **EP 2 836 387 B1**

(12) **FASCICULE DE BREVET EUROPEEN**

(45) Date de publication et mention
de la délivrance du brevet:
**09.10.2019 Bulletin 2019/41**

(21) Numéro de dépôt: **13720468.1**

(22) Date de dépôt: **10.04.2013**

(51) Int Cl.:
*B60L 3/00* (2019.01)　　*H02P 29/02* (2016.01)
*B60L 7/14* (2006.01)　　*B60L 15/00* (2006.01)
*B60L 50/40* (2019.01)　　*B60L 50/51* (2019.01)
*B60L 58/21* (2019.01)　　*B60L 15/20* (2006.01)

(86) Numéro de dépôt international:
**PCT/FR2013/050778**

(87) Numéro de publication internationale:
**WO 2013/153328 (17.10.2013 Gazette 2013/42)**

(54) **PROCÉDÉ DE COMMANDE D'UNE CHAÎNE DE PROPULSION ÉLECTRIQUE D'UN VÉHICULE**

VERFAHREN ZUR STEUERUNG EINES ELEKTRISCHEN ANTRIEBSSTRANGS EINES FAHRZEUGS

METHOD FOR CONTROLLING AN ELECTRIC DRIVE TRAIN OF A VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.04.2012 FR 1253337**

(43) Date de publication de la demande:
**18.02.2015 Bulletin 2015/08**

(73) Titulaire: **Valeo Siemens eAutomotive France SAS**
**95800 Cergy (FR)**

(72) Inventeurs:
• **BRUYERE, Antoine**
  **F-78700 Evecquemont (FR)**
• **BOUCHEZ, Boris**
  **F-95800 Cergy Le Haut (FR)**
• **CHAUVENET, Pierre-Alexandre**
  **95800 Cergy (FR)**

(74) Mandataire: **Argyma**
**36, rue d'Alsace Lorraine**
**31000 Toulouse (FR)**

(56) Documents cités:
EP-A2- 1 050 425　　JP-A- 11 027 806
JP-A- 2001 260 699　　US-A1- 2003 057 906
US-A1- 2009 230 901　　US-A1- 2009 284 193
US-A1- 2011 074 364

EP 2 836 387 B1

EP 2 836 387 B1

**Description**

La présente invention concerne la commande d'une chaîne de propulsion électrique d'un véhicule en cas de dysfonctionnement de composants de cette chaîne de propulsion.

L'invention s'applique notamment, mais non exclusivement, dans le cas où la machine électrique est une machine électrique tournante synchrone. Le véhicule peut être à propulsion exclusivement électrique ou à propulsion hybride. Il peut s'agir d'une automobile.

Il est connu d'alimenter l'enroulement électrique de stator d'une machine électrique tournante propulsant un véhicule à l'aide d'une batterie dont la tension continue est convertie par un onduleur en une tension adaptée à la machine électrique tournante. Par exemple en cas de défaillance dans l'onduleur et lorsque la machine atteint des vitesses importantes, la tension induite aux bornes de chaque phases du stator peut atteindre des valeurs importantes, ce qui peut avoir des conséquences non désirées et potentiellement dangereuses.

Deux problèmes peuvent notamment apparaître si l'onduleur fonctionne en redresseur :

- si la source d'énergie électrique autonome est connectée à l'onduleur, la tension aux bornes de chaque phase peut devenir supérieure à celle de ladite source et charger celle-ci. Cette charge de la source d'énergie correspond à un freinage intempestif du véhicule, non demandé par l'utilisateur du véhicule,
- si la source d'énergie électrique autonome est déconnectée de l'onduleur, la tension aux bornes de chaque phase peut prendre une valeur supérieure à la tension maximale admissible des cellules de commutation de l'onduleur, détériorant en tout ou partie ces cellules, ce qui affecte le contrôle ultérieur de la chaîne de propulsion.

Les valeurs de tension induites aux bornes de chaque phase du stator lorsque la machine est en rotation sont liées à la valeur de la force électromotrice à vide maximale de la machine (désignée par la suite « $fem0_{max}$ »), c'est-à-dire à la valeur de la force électromotrice à vide de la machine lorsqu'elle est à sa vitesse maximale. Cette dernière valeur est intrinsèque à la machine et dépend de sa structure.

Une solution théorique pour réduire les risques de freinage intempestif et de détérioration des cellules de commutation est de réduire la $fem0_{max}$ de la machine électrique pour qu'en cas de vitesse élevée de celle-ci, la tension induite aux bornes de chaque phase de la machine n'entraîne pas les conséquences négatives mentionnées ci-dessus. Néanmoins, pour une même valeur de couple nominal et pour une conception de machine donnée, plus la $fem0_{max}$ de la machine est faible, plus le courant électrique à supporter par la machine et par l'onduleur est élevé.

A titre d'exemple, on va considérer le cas d'une machine synchrone à aimants permanents de puissance nominale d'environ 40 kW. Lorsque l'on agit sur la configuration de cette machine pour que sa $fem0_{max}$ soit de 200 V, on s'assure que la tension induite aux bornes des phases du stator restera inférieure à 200 V, même lorsque la machine électrique est à vitesse maximale. Cette valeur de 200 V correspondant à la valeur minimale de la tension aux bornes des batteries couramment utilisées dans les chaînes de propulsion électrique de véhicules et n'étant pas susceptible de détériorer les cellules de commutation, les deux problèmes ci-dessus sont évités. Néanmoins, pour une telle valeur de $fem0_{max}$, le courant dans les phases du stator peut atteindre 900 A, ce qui est une valeur considérable et dangereuse ayant d'autres conséquences négatives.

A contrario, avec une machine configurée pour avoir une $fem0_{max}$ de 3000 V, les deux problèmes ci-dessus peuvent survenir mais le courant associé est de l'ordre de 60 A.

Ainsi, l'action sur la configuration de la machine pour diminuer significativement la valeur de sa $fem0_{max}$ n'est pas une solution satisfaisante car elle entraîne une augmentation conséquente des valeurs de courant dans le stator.

Les documents US 2011/074364 A1, JP 11 027806 A, US 2009/230901 A, US 2009/284193 A1 et JP 2001 260699 A décrivent des procédés de contrôle de la chaîne de propulsion d'un véhicule. Aucun de ces documents ne décrit de solution efficace pour réduire les risques de freinage intempestif et de détérioration des cellules de commutation.

Il existe un besoin pour éviter un freinage intempestif d'un véhicule ayant une chaîne de propulsion électrique et/ou pour éviter une détérioration partielle ou totale des cellules de commutation du système de commutation de cette chaîne de propulsion électrique.

L'invention a pour but de répondre à tout ou partie de ce besoin et elle y parvient, selon l'un de ses aspects, à l'aide d'un procédé de contrôle de la chaîne de propulsion électrique d'un véhicule, ladite chaîne comprenant :

- une machine électrique polyphasée, notamment tournante, comprenant un enroulement électrique de stator ayant une pluralité de bobines formant chacune une phase électrique du stator,
- une source d'énergie électrique autonome alimentant l'enroulement électrique de stator de la machine, et
- un système de commutation interposé entre la source d'énergie électrique autonome et l'enroulement électrique de stator et comprenant une pluralité de cellules de commutation, procédé dans lequel :

- on applique une commande au système de commutation pour faire fonctionner la chaîne de propulsion selon un mode prédéfini,
- on détecte un écart entre le mode de fonctionnement réel de la chaîne de propulsion et le mode de fonctionnement prédéfini, et

- on applique une commande auxiliaire au système de commutation, ladite commande auxiliaire court-circuitant seulement une partie des bobines de l'enroulement électrique de stator de manière à ce que la tension aux bornes de chaque bobine non court-circuitée soit inférieure à une valeur seuil donnée.

L'écart détecté entre le mode de fonctionnement prédéfini et le mode de fonctionnement réel de la chaîne de propulsion électrique est notamment dû à une défaillance d'un élément de la chaîne de propulsion, par exemple du système de commutation ou de la machine électrique. Le système de commutation peut comprendre une pluralité de bras et former un convertisseur de tension continu/alternatif; chaque bras s'étendant entre un conducteur positif et un conducteur négatif d'un bus continu et comprenant deux cellules de commutation entre lesquelles est reliée, directement ou non, une borne d'une bobine. La défaillance peut concerner une cellule de commutation d'un bras donné et le procédé selon l'invention peut alors permettre de ne pas court-circuiter la bobine dont une borne est reliée au bras contenant la cellule défaillante, tout en répondant aux exigences de sécurité.

Grâce à la commande auxiliaire selon le procédé ci-dessus, on évite le risque que cette défaillance, qui affecte la commande de la machine électrique, ne fasse prendre à la tension induite dans le stator des valeurs trop élevées, ces valeurs pouvant occasionner l'un et/ou l'autre des problèmes ci-dessus. L'invention permet ainsi d'accroître la sécurité de l'utilisateur du véhicule.

Selon un exemple de mise en oeuvre du procédé, la commande auxiliaire provoque le court-circuitage de toutes les bobines de l'enroulement électrique de stator sauf une. Dans ce cas, on vérifie que la tension aux bornes de la seule bobine non court-circuitée de l'enroulement électrique de stator reste inférieure à ladite valeur seuil de tension. Ce cas correspond notamment à un système de commutation à six bras.

Le procédé peut être mis en oeuvre dans une chaîne de propulsion électrique avec un système de commutation comprenant au moins quatre bras et, dans ce cas, la commande auxiliaire peut provoquer le court-circuitage de toutes les bobines de l'enroulement électrique de stator sauf au moins une, notamment au moins deux.

L'écart entre le mode de fonctionnement prédéfini et le mode de fonctionnement réel peut être détecté en surveillant la valeur de l'une au moins parmi :

- au moins une grandeur électrique associée à la chaîne de propulsion,
- au moins une grandeur mécanique associée à la chaîne de propulsion, et
- au moins une grandeur thermique associée à la chaîne de propulsion.

ne de propulsion.

Un exemple de grandeur électrique associée à la chaîne de propulsion est le courant électrique parcourant une bobine de l'enroulement électrique de stator, le courant électrique à une des extrémités d'un bras du système de commutation, le courant électrique de la source d'énergie électrique autonome, ou la tension aux bornes d'une bobine de l'enroulement électrique de stator.

Un exemple de grandeur mécanique associée à la chaîne de propulsion est la vitesse de la machine électrique ou le couple, mesuré ou estimé, sur l'arbre mécanique.

Un exemple de grandeur thermique associée à la chaîne de propulsion est la température dans le stator de la machine ou la température d'une cellule de commutation du système de commutation

En variante ou en complément, la chaîne de propulsion peut comprendre l'un au moins d'au moins un organe de mesure d'une grandeur électrique associée à la chaîne de propulsion, d'au moins un organe de mesure d'une grandeur mécanique associée à la chaîne de propulsion, d'au moins un organe de mesure d'au moins une grandeur thermique associée à la chaîne de propulsion, et on peut détecter l'écart entre le mode de fonctionnement prédéfini et le mode de fonctionnement réel en établissant un diagnostic du caractère opérationnel de cet organe de mesure.

La chaîne de propulsion comprend par exemple un ou plusieurs organes de mesure de grandeur(s) électrique(s), un ou plusieurs organes de mesure de grandeur(s) mécanique(s) et un ou plusieurs organes de mesure de grandeur(s) thermique(s) associées à la chaîne de propulsion, notamment pour mesurer les grandeurs ci-dessus, et l'écart peut être détecté en établissant un diagnostic du caractère opérationnel de ces organes de mesure. Pour chacun de ces organes, on peut vérifier qu'il fournit bien un signal traduisant la mesure effectuée et, si c'est le cas, comparer la mesure effectuée aux mesures attendues, par exemple par comparaison avec des tables de valeurs stockées dans une mémoire ou par comparaison avec les mesures délivrées par au moins un autre organe de mesure, cet autre organe de mesure ayant ou non été préalablement étalonné.

En variante ou en complément, l'écart entre le mode de fonctionnement prédéfini et le mode de fonctionnement réel peut être détecté en comparant pour chaque cellule de commutation l'état réel de ladite cellule et l'état de ladite cellule conforme au mode de fonctionnement prédéfini. Chaque cellule de commutation comprend notamment un interrupteur électronique commandable, par exemple un transistor bipolaire, à effet de champ ou de type IGBT, en anti-parallèle duquel est montée une diode, et on compare l'état réel de cet interrupteur, c'est-à-dire l'état fermé ou ouvert, avec l'état correspondant à la commande.

Lorsque l'on détecte l'écart, le système de commutation peut fonctionner comme un redresseur à diodes.

En variante ou en complément, chaque cellule de commutation reçoit des signaux de commande depuis un organe de commande et on détecte l'écart entre le mode de fonctionnement prédéfini et le mode de fonctionnement réel en comparant pour chaque cellule les signaux de commande envoyés aux signaux de commande à envoyer pour que la chaîne de propulsion fonctionne selon le mode prédéfini. On peut par exemple observer si les signaux de commande transitent bien sur un bus de communication reliant l'organe de commande à une cellule de commutation et, lorsque ces signaux existent, étudier leur contenu. L'organe de commande peut être centralisé pour toutes les cellules de commutation ou comprendre plusieurs modules dédiés à certaine(s) cellule(s) de commutation.

L'organe de commande met par exemple en oeuvre au moins un microcontrôleur ou au moins un circuit logique programmable (FPGA en anglais) et l'on vérifie que ce composant est opérationnel.

Selon un exemple de mise en oeuvre de l'invention, les bobines de l'enroulement électrique de stator peuvent ne pas être connectées électriquement entre elles. Des exemples de bobines connectées électriquement entre elles, contrairement audit exemple de mise en oeuvre, sont les bobines connectées en étoile ou en polygonal, ce qui correspond à la connexion en triangle dans le cas triphasé. Selon cet exemple de mise en oeuvre, chaque borne de chaque bobine est dans ce cas reliée à un bras du système de commutation.

La machine électrique peut être tournante et elle peut être une machine synchrone, notamment à rotor à aimants permanents. Il peut s'agir d'une machine triphasée, par exemple. En variante, il peut s'agir d'une machine électrique linéaire.

La machine électrique, notamment tournante, peut fonctionner en défluxage lorsque le procédé est mis en oeuvre.

La valeur seuil de tension peut être la même pour chaque bobine non court-circuitée et cette valeur peut être fonction de la tension minimale aux bornes de la source d'énergie électrique autonome.. On s'assure ainsi qu'il n'y aura pas de freinage intempestif puisque le court-circuitage permet d'éviter la charge de la source d'énergie électrique autonome par la machine électrique. Cette valeur seuil de tension est par exemple telle que, lorsque la tension induite aux bornes de la ou les bobines non court-circuitées prend cette valeur seuil, la tension redressée est égale à la valeur de tension minimale aux bornes de la source d'énergie électrique autonome. Cette valeur de tension minimale est notamment communiquée par le fabricant de ladite source.

En variante, la valeur seuil de tension peut être telle que, lorsque la tension induite aux bornes de la ou les bobines non court-circuitées prend cette valeur seuil, la tension redressée soit égale à un pourcentage de ladite valeur minimale de tension aux bornes de la source d'énergie électrique autonome, par exemple à 90% de ladite valeur minimale.

Selon un exemple de mise en oeuvre de l'invention, la chaîne de propulsion électrique peut comprendre en outre un convertisseur de tension continu/continu comprenant des cellules de commutation et un condensateur interposés entre la source d'énergie électrique autonome et le système de commutation. Le convertisseur de tension continu/continu peut permettre d'adapter la valeur de la tension de la source d'énergie électrique autonome à celle du système de commutation, et réciproquement.

Chaque cellule de commutation du système de commutation peut présenter une valeur maximale de tension admissible entre ses bornes et la valeur seuil de tension peut être déterminée en fonction de la plus petite valeur, sur l'ensemble du système de commutation, desdites valeurs maximales de tension admissible. Ces valeurs maximales admissibles peuvent être communiquées par le fabricant de composants des cellules de commutation. On peut ainsi s'assurer qu'aucune cellule de commutation ne sera endommagée, partiellement ou totalement, du fait des valeurs pouvant être prises par la tension induite dans le stator en raison de la défaillance dans la chaîne de propulsion. La valeur seuil de tension peut être égale à la plus petite valeur, sur l'ensemble du système de commutation, desdites valeurs maximales de tension admissible. En variante, la valeur seuil de tension est un pourcentage de cette plus petite valeur, étant par exemple égale à 90% de ladite plus petite valeur.

Dans ce cas, lorsque l'on applique la commande auxiliaire au système de commutation pour respecter cette valeur seuil de tension, on peut également appliquer une commande au convertisseur de tension continu/continu de manière à déconnecter le système de commutation de la source d'énergie électrique autonome. On s'assure ainsi qu'il n'y aura pas de freinage intempestif, de sorte que les deux problèmes identifiés ci-dessus sont résolus.

Chaque cellule de commutation du convertisseur de tension continu/continu peut comprendre un interrupteur électronique commandable en antiparallèle duquel est montée une diode de roue libre et on peut déconnecter le système de commutation de la source d'énergie électrique autonome en ouvrant chaque interrupteur électronique commandable du convertisseur de tension continu/continu.

La commande auxiliaire peut être appliquée tant que la vitesse de la machine électrique est supérieure à une valeur donnée. Cette dernière valeur est par exemple égale à 20% de la valeur de la vitesse à laquelle la commande auxiliaire est initiée. Si la commande auxiliaire est par exemple initiée à une vitesse de 10 000 tr/min, on peut maintenir cette commande tant que la vitesse est supérieure à 2 000 tr/min.

La source d'énergie électrique autonome présente par exemple une tension nominale comprise entre 60 V et 600 V, notamment entre 200 V et 400 V. La source d'énergie électrique autonome peut comprendre une ou plusieurs batteries ou tout autre type d'unités de stockage d'énergie électrique, par exemple des supercondensateurs. La source d'énergie électrique autonome peut comprendre des batteries en série, en parallèle ou des branches en parallèle de batteries en série.

La machine électrique a par exemple une puissance nominale comprise entre et 3 kW et 200 kW.

Dans d'autres exemples, la commande auxiliaire peut consister à court-circuiter toutes les bobines de l'enroulement électrique de stator.

Lorsque l'écart entre le mode de fonctionnement réel de la chaîne de propulsion et le mode de fonctionnement prédéfini est détecté, la commande auxiliaire peut être initiée instantanément ou après une temporisation.

L'invention pourra être mieux comprise à la lecture de la description qui va suivre d'exemples non limitatifs de mise en oeuvre de celle-ci et à l'examen du dessin annexé sur lequel :

- la figure 1 représente de façon schématique un premier exemple de chaîne de propulsion électrique de véhicule dans laquelle peut être mis en oeuvre un premier exemple de procédé selon l'invention,
- la figure 2 représente la chaîne de propulsion de la figure 1 lorsque le procédé est mis en oeuvre,
- la figure 3 représente de façon schématique un deuxième exemple de chaîne de propulsion électrique de véhicule dans laquelle peut être mis en oeuvre un deuxième exemple de procédé selon l'invention,
- la figure 4 représente la chaîne de propulsion de la figure 3 lorsque le procédé est mis en oeuvre,
- la figure 5 représente les valeurs de tension aux bornes des bobines de l'enroulement électrique de stator de la chaîne de propulsion lorsqu'elle est commandée comme représenté sur la figure 6a et lorsqu'elle est commandée comme représenté sur la figure 6b.

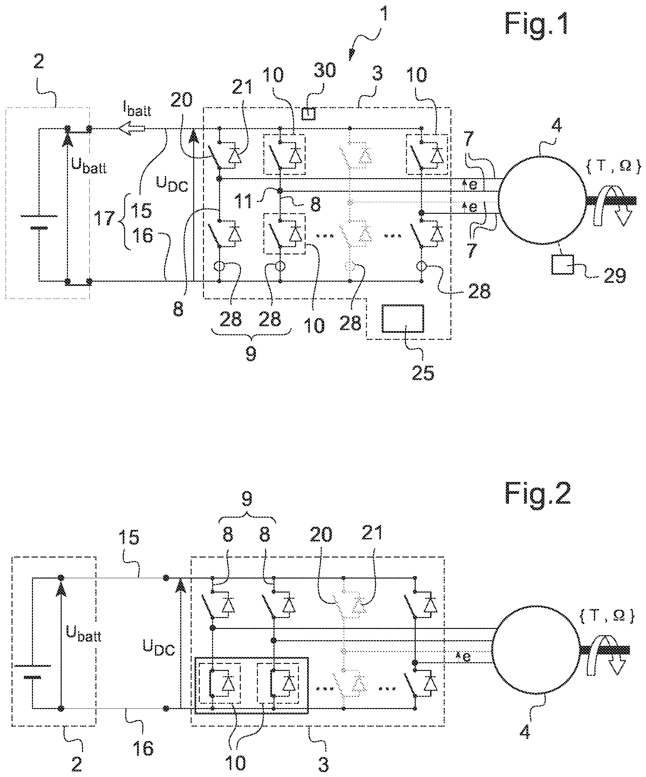

On a représenté de façon schématique à la figure 1 un exemple de chaîne de propulsion électrique 1 de véhicule dans laquelle peut être mis en oeuvre un exemple de procédé selon l'invention. Ce véhicule est par exemple à propulsion exclusivement électrique. Il peut en variante être à propulsion hybride, intégrant alors une chaîne de propulsion comprenant un moteur thermique, par exemple à combustion interne. Le véhicule est dans l'exemple considéré une automobile.

Dans l'exemple de la figure 1, la chaîne de propulsion 1 comprend une source d'énergie électrique autonome 2, un système de commutation 3 et une machine électrique tournante 4 dont l'enroulement électrique de stator est alimenté par la source d'énergie électrique autonome 2 à travers le système de commutation 3. La source d'énergie électrique autonome 2 est par exemple formée par tout assemblage de batteries, de manière à présenter une tension nominale comprise entre 60 V et 400 V.

La machine électrique tournante 4 est dans l'exemple considéré une machine synchrone à aimants permanents, mais l'invention n'est pas limitée à ce type de machine synchrone, voire même à une machine synchrone. Comme représenté sur la figure 1, l'enroulement électrique de stator de cette machine 4 comprend des bobines non électriquement connectées entre elles. Chaque bobine comprend deux bornes 7 non directement reliées à des bornes des autres bobines. La machine électrique tournante présente par exemple une puissance nominale comprise entre 3 kW et 200 kW. Toujours dans l'exemple considéré, la machine est triphasée, bien que toutes les phases de la machine ne soient pas représentées sur la figure 1.

Dans l'exemple de la figure 1, le système de commutation 3 comprend six bras 8. Le système de commutation 3 forme un convertisseur de tension continu/alternatif et chaque bras s'étend entre le conducteur positif 15 et le conducteur négatif 16 d'un bus continu 17 transférant l'énergie électrique depuis la source d'énergie électrique autonome 2 vers le système de commutation 3, et inversement. Ces bras 8 sont appariés pour former trois ponts en H 9, chaque pont en H 9 étant dédié à une bobine de l'enroulement électrique de stator.

Chaque bras 8 comprend dans l'exemple décrit deux cellules de commutation 10 séparées par un point médian 11. Dans l'exemple considéré, chaque borne 7 d'une bobine de l'enroulement électrique de stator est directement reliée à un point médian 11 d'un bras.

Chaque cellule de commutation 10 est dans l'exemple considéré formé par le montage en antiparallèle d'un interrupteur électronique commandable 20 et d'une diode de roue libre 21. L'interrupteur électronique commandable 20 est par exemple un transistor, notamment un transistor à effet de champ, un transistor bipolaire ou un transistor de type IGBT. Les cellules de commutation 10 sont par exemple toutes identiques.

Le système de commutation 3 comprend encore, dans l'exemple considéré, une unité de contrôle 25 (appelée « driver » en anglais) envoyant des signaux de commande aux interrupteurs électroniques 20, les bus de communication entre les interrupteurs 20 et l'unité de contrôle 25 n'étant pas représentés sur la figure 1 pour la clarté du dessin.

L'invention n'est cependant pas limitée à l'emploi d'une unité de contrôle centralisée en charge du contrôle de tous les interrupteurs électroniques commandables 20. L'unité de contrôle 25 comprend par exemple un ou plusieurs microcontrôleurs et/ou un ou plusieurs circuits logiques programmables (FPGA en anglais).

Comme représenté sur la figure 1, la chaîne de propulsion 1 peut encore comprendre des organes de mesure de grandeur(s) électrique(s) associées à la chaîne de propulsion 1, un organe de mesure de grandeur mécanique associée à la chaîne de propulsion 1 et un organe de mesure de grandeur thermique associée à la chaîne de propulsion 1. Il s'agit par exemple d'un organe de mesure de courant 28 dans chaque bras 8, d'un capteur de vitesse 29 de la machine électrique tournante 4 et d'un capteur de température 30 dans le système de commutation 3.

La chaîne de propulsion 1 comprend par ailleurs un relais 40 en série de la source d'énergie électrique autonome 2, configuré pour permettre de déconnecter la source 2 du système de commutation 3. Ce relais est par exemple réalisé à l'aide d'un interrupteur mécanique, électromécanique ou électronique.

Dans l'exemple de la figure 1, un écart est détecté entre le mode de fonctionnement de la chaîne de propulsion 1 qui est attendu conformément à la commande qui lui est appliquée, par exemple par un superviseur communiquant avec l'unité de contrôle 25 du système de commutation 3, et le mode de fonctionnement réel de la chaîne de propulsion 1.

Cet écart est par exemple détecté à l'aide de l'étude des mesures fournies par tout ou partie des organes de mesure 28 à 30 ci-dessus. En variante, cet écart est obtenu en étudiant l'état des interrupteurs électroniques commandables 20 et en comparant chaque état avec l'état correspondant à la commande appliquée au système de commutation 3. En variante encore, cet état est obtenu en s'assurant que l'unité de contrôle 25 envoie bien des signaux de commande aux interrupteurs électroniques commandables 20 en écoutant le bus de communication par lequel ces signaux transitent. Lorsque des signaux sont envoyés, ils peuvent être analysés pour s'assurer de leur conformité avec les signaux attendus.

L'écart détecté correspond dans l'exemple considéré à une défaillance de la chaîne de propulsion 1. Cette défaillance concerne par exemple une des cellules de commutation 10.

Du fait de cette défaillance, la commande du système de commutation 3 peut ne plus fonctionner et le système de commutation 3 peut se comporter comme un redresseur à diode, tous les interrupteurs électroniques 20 étant ouverts.

Dans le cas de la figure 1, la source d'énergie électrique autonome 2 est en circuit fermé avec le système de commutation. Lorsque la machine électrique tournante 4 est défluxée, sa vitesse peut atteindre des valeurs pour lesquelles la tension e induite aux bornes de chaque bobine de l'enroulement électrique de stator est telle que la valeur de la tension $U_{DC}$ du bus continu redressée par le système de commutation 3 peut devenir supérieure à la tension $U_{batt}$ aux bornes de la source d'énergie électrique autonome 2. Du courant $I_{batt}$ peut alors circuler dans le bus continu 17 pour charger l'unité d'énergie électrique autonome 2. Cette charge occasionnerait alors un freinage intempestif du véhicule.

Pour éviter ce freinage intempestif, le système de commutation est commandé selon un mode de commande auxiliaire lorsque l'écart est détecté.

Comme représenté sur la figure 2, cette commande consiste à commander des interrupteurs électroniques 20 de manière à ce que certaines bobines de l'enroulement électrique de stator soient court-circuitées tandis que d'autres bobines ne le sont pas.

Un court-circuit peut être formé aux bornes d'une bobine à travers les interrupteurs électroniques commandables 20 des cellules de commutation inférieures 10 du pont en H 9 dédié à ladite bobine. Cette commande auxiliaire a, dans le cas présent, pour but de maintenir la tension e aux bornes de la ou les bobines non court-circuitées inférieure à une valeur seuil de tension. Cette valeur seuil de tension est dans l'exemple des figures 1 et 2 fonction de la valeur minimale prise par la tension $U_{batt}$ aux bornes de la source d'énergie électrique autonome 2.

Cette valeur seuil est par exemple telle que, lorsque la tension e induite aux bornes de la ou les bobines non court-circuitées est égale à cette valeur seuil, la tension redressée $U_{DC}$ est égale à la valeur minimale de la tension aux bornes de la source d'énergie électrique autonome 2.

On s'assure ainsi que la tension $U_{DC}$ redressée par le système de commutation 3 fonctionnant en onduleur ne sera pas supérieure la tension $U_{batt}$ aux bornes de la source d'énergie électrique autonome 2, même dans le cas le plus défavorable, empêchant ainsi tout freinage intempestif.

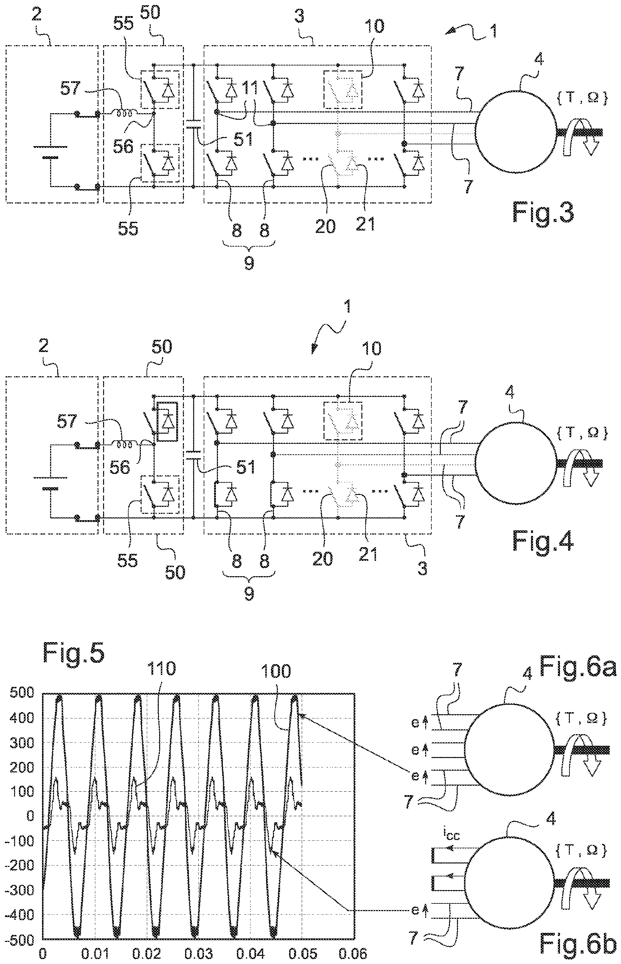

On va maintenant décrire, en référence aux figures 3 et 4, un autre exemple de procédé selon l'invention, mis en oeuvre dans une chaîne de propulsion 1 différente.

La chaîne de propulsion 1 représentée sur la figure 3 diffère de celle qui vient d'être décrite par le fait qu'un convertisseur de tension continu/continu 50 et un condensateur 51 sont interposés entre la source d'énergie électrique autonome 2 et le système de commutation 3. Le convertisseur de tension continu/continu 50 est dans l'exemple considéré un hacheur série réalisant une fonction de dévoltage.

De façon connue, le hacheur série 50 comprend deux cellules de commutation 55 identiques ou non aux cellules de commutation 10 du système de commutation 3, et séparées par un point médian 56. Chacune de ces cellules 55 est dans l'exemple considéré réversible, comprenant en antiparallèle un interrupteur électronique commandable et une diode. Une inductance 57 est interposée entre ce point médian 56 et la source d'énergie électrique autonome 2.

Le condensateur 51 a par exemple une capacité comprise entre 100 μF et et 2500μF.

Les organes de mesure 28 à 30 ainsi que l'unité de contrôle 25, bien que présents dans l'exemple des figures 3 et 4, n'ont pas été représentés sur ces figures.

Grâce à la présence du convertisseur 50 et du condensateur 51, la source d'énergie électrique autonome 2 peut être déconnectée du système de commutation 3, de sorte que le problème de freinage intempestif décrit en référence à la figure 1 est évité.

En revanche, lorsque le système de commutation 3 fonctionne en redresseur à diodes du fait de la défaillance détectée et que la machine électrique tournante 4 prend des valeurs de vitesse élevées, la tension e induite aux bornes de chaque bobine de l'enroulement électrique de stator peut prendre des valeurs importantes. La figure 6a représente très schématiquement l'apparition des ces tensions induites e aux bornes 7 de chaque bobine et une mesure de l'un de ces 3 tensions est représentée en 100 sur la figure 5.

Comme on peut le voir sur la figure 5, la tension e prend dans l'exemple considéré une valeur crête à crête de près de 1000 V. Cette valeur de tension est supérieure à la tension maximale admissible par les composants formant les cellules de commutation 10. Or, du fait du fonctionnement en redresseur à diodes, cette tension est appliquée à une cellule de commutation de chaque bras. Il en résulte ainsi une dégradation partielle ou totale de ces cellules de commutation 10.

Pour éviter cette dégradation, la détection de l'écart entre le mode de fonctionnement réel de la chaîne de propulsion 1 et le mode de fonctionnement prédéfini selon la commande appliquée provoque l'initialisation d'une commande auxiliaire consistant à :

-　court-circuiter certaines bobines de l'enroulement électrique de stator tout en laissant une ou plusieurs autres bobines de cet enroulement non court-circuitées, similairement à ce qui a été décrit en référence à la figure 2, et
-　ouvrir les interrupteurs commandables des cellules de commutation 55 du convertisseur de tension continu/continu 50, de manière à déconnecter la source d'énergie électrique autonome 2 du système de commutation 3.

La commande auxiliaire peut permettre que la tension aux bornes 7 de la ou les bobines soit sensiblement réduite, par comparaison avec le cas où la commande auxiliaire n'est pas appliquée. La commande auxiliaire est effectuée de manière à ce que la tension e induite aux bornes de la ou les bobines de l'enroulement électrique de stator non court-circuitées soit inférieure à une valeur seuil fonction de la plus petite tension maximale admissible par l'une des cellules de commutation 10. Chaque cellule de commutation $10_j$ présente par exemple une valeur de tension maximale admissible $U_{max\,j}$ liée à son dimensionnement et la valeur seuil de tension $V_{seuil}$ peut être déterminée comme suit :

$$V_{seuil} = \min\left\{U_{max\,j}\right\}$$

En observant les figures 5 et 6b, on constate que pour la machine synchrone triphasée 4 considérée, seule une bobine n'est pas court-circuitée et que la tension e représentée en 110 sur la figure 5 lorsque la commande auxiliaire est mise en oeuvre est sensiblement inférieure à la tension 100. La tension e représentée en 110 présente en effet dans l'exemple considéré une valeur crête à crête de l'ordre de 280 V.

La commande auxiliaire selon la figure 4 permet ainsi de remédier au problème de freinage intempestif en déconnectant la source d'énergie électrique autonome 2 du système de commutation 3 fonctionnant en redresseur à diodes et en limitant la tension aux bornes des cellules de commutation 10 du système de commutation 3 à des valeurs inférieures à leur tensions maximale admissible.

Dans tous les exemples qui viennent d'être décrits, la commande auxiliaire peut être appliquée tant que la vitesse de rotation de la machine électrique tournante 4 est supérieure à une valeur donnée. Cette dernière valeur est par exemple égale à 30% de la valeur de la vitesse à laquelle la commande auxiliaire est initiée. Si la commande auxiliaire est par exemple initiée à une vitesse de 10 000 tr/min, on maintiendra cette commande tant que la vitesse reste supérieure à 2 000 tr/min..

L'invention n'est pas limitée aux exemples qui viennent d'être décrits.

La source d'énergie électrique autonome 2 peut être chargée à l'aide d'un connecteur relié aux points milieux de chaque bobine de l'enroulement électrique de stator, de sorte que lors de la charge de la source d'énergie électrique autonome 2, les bobines se comportent comme des inductances et le système de commutation 3 se comporte comme un redresseur. L'enseignement de la demande WO 2010/ 057893 peut ainsi être appliqué pour que la chaîne de propulsion 1 permette aussi la charge de la source d'énergie électrique autonome 2 à travers les bobines de l'enroulement électrique de stator et à travers le système de commutation 3.

En variante, un circuit de charge spécifique de la source d'énergie électrique autonome 2 avec redresseur dédié et inductances dédiées peut être embarqué sur le véhicule.

Le procédé peut être mise en oeuvre par exemple avec des machines synchrones à rotor bobiné ou avec d'autres types de machine, quel que soit leur nombre de phases dès lors que ce dernier est supérieur à un. Le procédé peut également être mis en oeuvre avec des machines électriques non tournantes, par exemple avec des machines électriques linéaires.

L'expression « comportant un » doit être comprise comme étant synonyme de l'expression « comportant au moins un », sauf lorsque le contraire est spécifié.

## Revendications

1.　Procédé de contrôle de la chaîne de propulsion électrique (1) d'un véhicule, ladite chaîne comprenant :

    - une machine électrique polyphasée (4), notamment tournante, comprenant un enroulement électrique de stator ayant une pluralité de bobines formant chacune une phase électrique du stator,

- une source d'énergie électrique autonome (2) alimentant l'enroulement électrique de stator de la machine (4), et

- un système de commutation (3) interposé entre la source d'énergie électrique autonome (2) et l'enroulement électrique de stator et comprenant une pluralité de cellules de commutation (10),

procédé dans lequel:

- on applique une commande au système de commutation (3) pour faire fonctionner la chaîne de propulsion électrique (1) selon un mode prédéfini,

- on détecte un écart entre le mode de fonctionnement réel de la chaîne de propulsion (1) et le mode de fonctionnement prédéfini, **caractérisé en ce que**

- on applique une commande auxiliaire au système de commutation (3), ladite commande auxiliaire court-circuitant seulement une partie des bobines de l'enroulement électrique de stator de manière à ce que la tension (e) aux bornes de chaque bobine non court-circuitée soit inférieure à une valeur seuil donnée.

2. Procédé selon la revendication 1, dans lequel la commande auxiliaire provoque le court-circuitage de toutes les bobines de l'enroulement électrique de stator sauf une.

3. Procédé selon la revendication 1, dans lequel la commande auxiliaire provoque le court-circuitage de toutes les bobines de l'enroulement électrique de stator sauf au moins deux.

4. Procédé selon l'une quelconque des revendications précédentes, dans lequel on détecte l'écart entre le mode de fonctionnement prédéfini et le mode de fonctionnement réel en surveillant la valeur de l'une au moins parmi :

- au moins une grandeur électrique associée à la chaîne de propulsion (1),

- au moins une grandeur mécanique associée à la chaîne de propulsion (1), et

- au moins une grandeur thermique associée à la chaîne de propulsion (1).

5. Procédé selon l'une quelconque des revendications précédentes, dans lequel la chaîne de propulsion (1) comprend l'un au moins :

- d'au moins un organe de mesure (28) d'une grandeur électrique associée à la chaîne de propulsion (1),

- d'au moins un organe de mesure (29) d'une grandeur mécanique associée à la chaîne de propulsion (1),

- d'au moins un organe de mesure (30) d'au moins une grandeur thermique associée à la chaîne de propulsion (1),

et dans lequel on détecte l'écart entre le mode de fonctionnement prédéfini et le mode de fonctionnement réel en établissant un diagnostic du caractère opérationnel de cet organe de mesure (28, 29, 30).

6. Procédé selon l'une quelconque des revendications précédentes, dans lequel on détecte l'écart entre le mode de fonctionnement prédéfini et le mode de fonctionnement réel en comparant pour chaque cellule de commutation (10) l'état réel de ladite cellule (10) et l'état de ladite cellule (10) conforme au mode de fonctionnement prédéfini.

7. Procédé selon l'une quelconque des revendications précédentes, dans lequel chaque cellule de commutation (10) reçoit des signaux de commande depuis un organe de commande (25) et dans lequel on détecte l'écart entre le mode de fonctionnement prédéfini et le mode de fonctionnement réel en comparant pour chaque cellule (10) les signaux de commande reçus aux signaux de commande à appliquer pour que la chaîne de propulsion (1) fonctionne selon le mode prédéfini.

8. Procédé selon l'une quelconque des revendications précédentes, dans lequel les bobines de l'enroulement électrique de stator ne sont pas connectées électriquement entre elles.

9. Procédé selon l'une quelconque des revendications précédentes, dans lequel la machine électrique (4) est une machine électrique tournante synchrone, notamment à rotor à aimants permanents.

10. Procédé selon l'une quelconque des revendications précédentes, étant mis en oeuvre alors que la machine électrique (4) est défluxée.

11. Procédé selon l'une quelconque des revendications précédentes, dans lequel la valeur seuil de tension pour chaque bobine non court-circuitée est fonction de la tension minimale ($U_{batt}$) aux bornes de la source d'énergie électrique autonome (2).

12. Procédé selon l'une quelconque des revendications 1 à 10, dans lequel la chaîne de propulsion électrique (1) comprend en outre un convertisseur de tension continu/continu (50) comprenant des cellules de commutation (55) et un condensateur (51) interposés entre la source d'énergie électrique autonome (2) et le système de commutation (3).

13. Procédé selon la revendication 12, dans lequel chaque cellule de commutation (10) du système de commutation (3) présente une valeur maximale de tension admissible entre ses bornes et dans lequel la valeur seuil de tension est fonction de la plus petite, sur l'ensemble du système de commutation, desdites valeurs maximales de tension admissible.

14. Procédé selon la revendication 12 ou 13, dans lequel, lorsque l'on applique la commande auxiliaire au système de commutation (3), on applique également une commande au convertisseur de tension continu/continu (50) de manière à déconnecter le système de commutation (3) de la source d'énergie électrique autonome (2).

15. Procédé selon la revendication 14, dans lequel chaque cellule de commutation (55) du convertisseur de tension continu/continu (50) comprend un interrupteur électronique commandable en antiparallèle duquel est montée une diode de roue libre et dans lequel on déconnecte le système de commutation (3) de la source d'énergie électrique autonome (2) en ouvrant chaque interrupteur électronique commandable du convertisseur de tension continu/continu (50).

**Patentansprüche**

1. Steuerungsverfahren des elektrischen Antriebsstrangs (1) eines Fahrzeugs, bestehend aus:

   - Einer mehrphasigen rotierenden elektrischen Maschine (4), bestehend aus einer elektrischen Statorwindung mit einer Vielzahl an Spulen, wobei jede eine elektrische Statorphase bildet,
   - Eine autonome elektrische Energiequelle (2), die die elektrische Statorwicklung der Maschine (4) einspeist, und
   - Einer Schaltanlage (3) zwischen der autonomen elektrischen Energiequelle (2) und der elektrischen Statorwicklung und bestehend aus einer Vielzahl von Schaltzellen (10),

   Verfahren, in dem:

   - Eine Steuerung an das Schaltsystem (3) angelegt wird, um den elektrischen Antriebsstrang (1) zu betreiben gemäß einer vorbestimmten Betriebsart,
   - Eine Abweichung zwischen der tatsächlichen Betriebsart des Antriebsstrangs (1) und der vorbestimmten Betriebsart, **dadurch gekennzeichnet, dass**

   - Ein Hilfsantrieb an das Schaltsystem (3), wobei der besagte Hilfsantrieb nur einen Teil der Spulen der elektrischen Statorwicklung kurzschaltet, so dass die Spannung (e) an den Klemmen jeder einzelnen, nicht kurzgeschalteten Spule unter einem gegebenen Schwellenwert liegt.

2. Verfahren gemäß Patentanspruch 1, **dadurch gekennzeichnet, dass** der Hilfsantrieb zur Kurzschaltung sämtlicher Spulen der elektrischen Statorwicklung führt, mit Ausnahme einer einzigen führt.

3. Verfahren gemäß Patentanspruch 1, **dadurch gekennzeichnet, dass** der Hilfsantrieb zur Kurzschaltung sämtlicher Spulen der elektrischen Statorwicklung, mit Ausnahmen von mindestens zwei führt.

4. Verfahren gemäß einem der vorherigen Patentansprüche, in dem die Abweichung zwischen der vorbestimmten Betriebsart und der tatsächlichen Betriebsart durch die Kontrolle von mindestens einem der folgenden Werte erkannt wird:

   - mindestens eine elektrische Größe verbunden mit dem Antriebsstrang (1),
   - mindestens eine mechanische Größe verbunden mit dem Antriebsstrang (1), und
   - mindestens eine thermische Größe verbunden mit dem Antriebsstrang (1).

5. Verfahren gemäß einem der vorherigen Patentansprüche, in dem der Antriebsstrang (1) mindestens aus einem der folgenden Komponenten besteht:

   - mindestens einem Messorgan (28) mit einer elektrischen Größe verbunden mit dem Antriebsstrang (1),
   - mindestens einem Messorgan (29) mit einer mechanischen Größe verbunden mit dem Antriebsstrang (1),
   - mindestens einem Messorgan (30) mit einer thermischen Größe verbunden mit dem Antriebsstrang (1),

   und in dem die Abweichung zwischen der vorbestimmten und der tatsächlichen Betriebsart durch die Aufstellung einer Diagnose des operativen Charakters dieses Messorgans (28, 29, 30).

6. Verfahren gemäß einem der vorherigen Patentansprüche, in dem die Abweichung zwischen der vorbestimmten Betriebsart und der tatsächlichen Betriebsart durch den Vergleich aller Schaltzellen (10) des tatsächlichen Zustandes der besagten Schaltzelle (10) gemäß der vorbestimmten Betriebsart.

7. Verfahren gemäß einer der vorherigen Patentansprüche, in dem jede Schaltzelle (10) Steuersignale von einem Steuerorgan (25) erhält und in dem eine Abweichung zwischen der vorbestimmten Betriebsrat und der tatsächlichen Betriebsart durch den Vergleich für alle Schaltzellen (10) der empfangenen Steuersignale mit den anzuwendenden Steuersignalen, damit der Antriebsstrang (1) gemäß der vorbestimmten Betriebsart funktioniert.

8. Verfahren gemäß einer der vorherigen Patentansprüche, in dem die Spulen der elektrischen Statorwicklung untereinander nicht elektrisch verbunden sind.

9. Verfahren gemäß einer der vorherigen Patentansprüche, in der die elektrische Maschine (4) eine drehende Synchronmaschine ist, insbesondere mit einem Dauermagnet-Läufer.

10. Verfahren gemäß einer der vorherigen Patentansprüche, bei dem die elektrische Maschine (4) entregt ist.

11. Verfahren gemäß einer der vorherigen Patentansprüche, in dem der Unterspannungsschwellenwert für jede nicht kurzgeschaltete Spule von der Mindestspannung ($U_{batt}$) an den Klemmen der autonomen elektrischen Energiequelle (2) abhängt.

12. Verfahren gemäß einer der vorherigen Patentansprüche 1 bis 10, in der der elektrische Antriebsstrang (1) darüber hinaus über einen Gleichspannungs-/Gleichspannungswandler (50) verfügt, bestehend aus Schaltzellen (55) und einem Kondensator (51), die zwischen der autonomen elektrischen Energiequelle (2) und dem Schaltsystem (3) angeordnet sind.

13. Verfahren gemäß des Patentanspruchs 12, in dem die Schaltzelle (10) des Schaltsystems (3) einen maximal zulässigen Spannungswert zwischen seinen Klemmen aufweist und in dem der Spannungsschwellenwert im gesamten Schaltsystem von dem kleinsten Wert der besagten maximal zulässigen Spannungswerten abhängt, im gesamten Schaltsystem.

14. Verfahren gemäß des Patentanspruchs 12 oder 13, in dem bei der Anwendung eines Hilfsantriebs an das Schaltsystem (3), ebenfalls eine Steuerung an den Gleichspannungs-/Gleichspannungswandler (50) angelegt wird, und zwar so, dass das Schaltsystem (3) von der autonomen elektrischen Energiequelle (2) getrennt ist.

15. Verfahren gemäß des Patentanspruchs 14, in dem jede Schaltzelle (55) des Gleichspannungs-/Gleichspannungswandlers (50) einen ansteuerbaren Elektronikschalter umfasst, auf dem eine Freilaufdiode eingebaut ist und in dem das Schaltsystem (3) von der autonomen elektrischen Energiequelle durch Öffnen jedes einzelnen ansteuerbaren Elektronikschalters des Gleichspannungs-/Gleichspannungswandlers (50).

**Claims**

1. A method for controlling the electrical drive chain (1) of a vehicle, said drive chain comprising:

   - polyphase electrical machine (4), in particular a rotating polyphase electrical machine, comprising a stator electrical winding having a plurality of coils each forming an electrical phase of the stator,
   - a self-contained electrical energy source (2) supplying the stator electrical winding of the machine (4), and
   - a switching system (3) interposed between the self-contained electrical energy source (2) and the stator electrical winding and comprising a plurality of switching cells (10),

   method in which:

   - a command is applied to the switching system (3) to operate the electrical drive chain (1) according to a predefined mode,
   - a deviation between the real operating mode of the drive chain (1) and the predefined operating mode is detected, **characterised in that**
   - an auxiliary command is applied to the switching system (3), said auxiliary command short-circuiting only part of the coils of the stator electrical winding such that the voltage (e) across each non-short-circuited coil is lower than a given threshold value.

2. The method according to claim 1, wherein the auxiliary command causes short-circuiting of all the coils of the stator electrical winding except one.

3. The method according to claim 1, wherein the auxiliary command causes short-circuiting of all the coils of the stator electrical winding except at least two.

4. The method according to any of the preceding claims, wherein the deviation between the predefined operating mode and the real operating mode is detected by monitoring the value of at least one among:

   - at least one electrical quantity associated with the drive chain (1),
   - at least one mechanical quantity associated with the drive chain (1), and
- at least one thermal quantity associated with the drive chain (1).

5. The method according to any of the preceding claims, wherein the drive chain (1) comprises at least one from:

    - at least one measurement member (28) for measuring an electrical quantity associated with the drive chain (1),
    - at least one measurement member (29) for measuring a mechanical quantity associated with the drive chain (1),
    - at least one measurement member (30) for measuring at least one thermal quantity associated with the drive chain (1),

and wherein the deviation between the predefined operating mode and the real operating mode is detected by performing a diagnostic of the operational nature of this measurement member (28, 29, 30).

6. The method according to any of the preceding claims, wherein the deviation between the predefined operating mode and the real operating mode is detected by comparing for each switching cell (10), the real state of said cell (10) and the state of said cell (10) in accordance with the predefined operating mode.

7. The method according to any of the preceding claims, wherein each switching cell (10) receives command signals from a command member (25) and wherein the deviation between the predefined operating mode and the real operating mode is detected by comparing for each cell (10), the command signals received with the command signals to be applied such that the drive chain (1) operates according to the predefined mode.

8. The method according to any of the preceding claims, wherein the coils of the stator electrical winding are not electrically connected to each other.

9. The method according to any of the preceding claims, wherein the electrical machine (4) is a synchronous rotating electrical machine, in particular with a permanent magnet rotor.

10. The method according to any of the preceding claims, being implemented whereas the electrical machine (4) is defluxed.

11. The method according to any of the preceding claims, wherein the voltage threshold value for each non-short-circuited coil is a function of the minimum voltage ($U_{batt}$) across the self-contained electrical energy source (2).

12. The method according to any of claims 1 to 10, wherein the electrical drive chain (1) further comprises a DC/DC voltage converter (50) comprising switching cells (55) and a capacitor (51) interposed between the self-contained electrical energy source (2) and the switching system (3).

13. The method according to claim 12, wherein each switching cell (10) of the switching system (3) has a maximum permissible voltage value across it and wherein the voltage threshold value is a function of the smallest one, on the whole switching system, of said maximum permissible voltage values.

14. The method according to claim 12 or 13, wherein, when the auxiliary command is applied to the switching system (3), a command is also applied to the DC/DC voltage converter (50) so as to disconnect the switching system (3) from the self-contained electrical energy source (2).

15. The method according to claim 14, wherein each switching cell (55) of the DC/DC voltage converter (50) comprises an electronic switch commandable in anti-parallel to which a free wheel diode is connected and in which the switching system (3) is disconnected from the self-contained electrical energy source (2) by opening each commandable electronic switch of the DC/DC voltage converter (50).

Fig.1

Fig.2

Fig.3

Fig.4

Fig.5

Fig.6a

Fig.6b

**RÉFÉRENCES CITÉES DANS LA DESCRIPTION**

**Documents brevets cités dans la description**

- US 2011074364 A1
- JP 11027806 A
- US 2009230901 A
- US 2009284193 A1
- JP 2001260699 A
- WO 2010057893 A